# NEUE EUROPÄISCHE PATENTSCHRIFT

(11) **EP 2 886 966 B2**
(45) Veröffentlichungstag und Bekanntmachung des Hinweises auf die Entscheidung über den Einspruch: **25.12.2024**
(45) Hinweis auf die Patenterteilung: 15.04.2020
(21) Anmeldenummer: 14181058.0
(22) Anmeldetag: 14.08.2014
(51) Int. Cl.: F24F 3/16, F24F 11/30, F24F 11/52, F24F 120/10, F24F 120/12, F24F 110/64

(54) **Reinraumsystem und Verfahren zu dessen Betrieb**
Clean room system and method of operating the same
Système de salle blanche et méthode de contrôle d'une telle salle

(30) Priorität: 20.12.2013 DE 102013114724
(43) Veröffentlichungstag der Anmeldung: 24.06.2015
(73) Patentinhaber: Schilling Engineering GmbH, 79793 Wutöschingen (DE)
(72) Erfinder: Schilling, Günther, 79771 Klettgau (DE)
(74) Vertreter: Daub, Thomas

(56) Entgegenhaltungen:
- EP-A2- 1 850 074
- EP-A2- 2 527 755
- EP-A2- 2 623 878
- EP-A2- 2 722 603
- WO-A2-2012/112775
- DD-A5- 292 314
- DE-A1- 102012 020 202
- JP-A- 2009 030 837
- JP-A- H03 263 534
- JP-A- H06 101 880
- JP-B2- 2 673 835
- US-A- 5 664 995
- US-A1- 2003 045 226
- "Reinraumtechnik Energieeffizienz", VDI 2083 BLATT 4.2, April 2011 (2011-04-01)
- "PERSONEN-AKTIVSCHLEUSE", FIRMENSCHRIFT BC-TECHNOLOGY GMBH (VERSION 1/12), 31 December 2012 (2012-12-31), DETTINGEN, XP002738593

## Beschreibung

### Stand der Technik

Die Erfindung betrifft ein Reinraumsystem.

Es sind bereits Reinraumsysteme vorgeschlagen worden, mit zumindest einem in wenigstens einem Betriebszustand abgeschlossenen Raum und mit zumindest einer Reinraumelektronikeinheit zu einer Bereitstellung von Reinraumbedingungen in dem wenigstens einen Raum.

Die US 2003/045226 A1 offenbart ein Reinraumsystem für einen abgeschlossenen Raum gemäß dem Oberbegriff von Anspruch 1.

Aus der EP 2 527 755 A2 ist ein Reinraumsystem bekannt, bei dem Luft über Gebläseeinheiten in den Raum eingebracht wird. Die Luftzufuhr erfolgt dabei abhängig von der gemessenen Partikelkonzentration in dem Raum.

Die Aufgabe der Erfindung besteht insbesondere darin, eine gattungsgemäße Vorrichtung mit verbesserten Eigenschaften hinsichtlich einer Effizienz bereitzustellen. Die Aufgabe wird erfindungsgemäß durch die Merkmale des Patentanspruchs 1 gelöst, während vorteilhafte Ausgestaltungen und Weiterbildungen der Erfindung den Unteransprüchen entnommen werden können.

### Vorteile der Erfindung

Zur Lösung der oben genannten Aufgabe wird ein Reinraumsystem mit den Merkmalen von Anspruch 1 sowie ein Verfahren zum Betrieb eines Reinraumsystem nach Anspruch 10 vorgeschlagen. Bevorzugte Ausführungsformen der Erfindung sind in den abhängigen Ansprüchen definiert.

Die Erfindung geht aus von einem Reinraumsystem mit zumindest einem in wenigstens einem Betriebszustand abgeschlossenen Raum und mit zumindest einer Reinraumelektronikeinheit zu einer Bereitstellung von Reinraumbedingungen in dem wenigstens einen Raum.

Es wird vorgeschlagen, dass das Reinraumsystem zumindest eine Recheneinheit, die zu einer nutzungs- und/oder verbrauchsgeführten Regelung der zumindest einen Reinraumelektronikeinheit vorgesehen ist. Dadurch kann insbesondere eine vorteilhaft hohe Effizienz der Reinraumelektronikeinheit erreicht werden. Ferner kann dadurch vorteilhaft eine Regelung der Reinraumelektronikeinheit abhängig von einer Nutzung und/oder einem Verbrauch erreicht werden. Unter einem "Reinraumsystem" soll in diesem Zusammenhang insbesondere ein System verstanden werden, das zumindest einen Teil eines Reinraums und/oder einer Anordnung von Reinräumen umfasst. Grundsätzlich wäre jedoch auch denkbar, dass das Reinraumsystem lediglich Komponenten für einen Reinraum umfasst. Unter einem "in wenigstens einem Betriebszustand abgeschlossenen Raum" soll in diesem Zusammenhang insbesondere ein Raum verstanden werden, der in zumindest einem Betriebszustand, vorzugsweise in einem Betriebszustand mit geschlossenen Zugangstüren, zumindest im Wesentlichen gegenüber einer Umgebung hinsichtlich eines freien Luftstroms abgeschirmt ist. Vorzugsweise soll darunter insbesondere ein Raum verstanden werden, bei dem in zumindest einem Betriebszustand ein Luftstrom gegenüber einer Umgebung gefiltert ist. Besonders bevorzugt soll darunter insbesondere ein Reinraum verstanden werden. Unter einer "Umgebung" soll in diesem Zusammenhang insbesondere ein das Reimraumsystem umschließender Freiraum verstanden werden. Vorzugsweise soll darunter insbesondere ein Freiraum mit einer undefinierten Partikelkonzentration verstanden werden. Ferner soll in diesem Zusammenhang unter einer "Reinraumelektronikeinheit" insbesondere eine Einheit verstanden werden, die zumindest einen Teil einer Elektronik eines Reinraums bildet. Vorzugsweise soll darunter insbesondere eine Einheit verstanden werden, die zu einer Bereitstellung von Reinraumbedingungen vorgesehen ist. Bevorzugt soll darunter insbesondere eine Einheit verstanden werden, die zu einer Steuerung von zumindest einer Reinraumkomponente vorgesehen ist. Besonders bevorzugt soll darunter insbesondere eine Einheit verstanden werden, die zu einer gesamten, insbesondere vernetzten Steuerung von mehreren Reinraumkomponenten vorgesehen ist. Des Weiteren sollen in diesem Zusammenhang unter "Reinraumbedingungen" insbesondere Bedingungen verstanden werden, die zur Bereitstellung eines Reinraums eingehalten werden müssen. Die Bedingungen können dabei insbesondere je nach Anwendungsgebiet und/oder Reinraumklasse variieren. Vorzugsweise soll darunter insbesondere Bedingungen für einen Reinraum verstanden werden, die durch Normen, wie beispielsweise ISO 14644, ECSS-Q-ST-70-01, VDI 2083 und/oder EU-GMP, definiert sind. Unter einer "Recheneinheit" soll insbesondere eine Einheit mit einem Informationseingang, einer Informationsverarbeitung und einer Informationsausgabe verstanden werden. Vorteilhaft weist die Recheneinheit zumindest einen Prozessor, einen Speicher, Ein- und Ausgabemittel, weitere elektrische Bauteile, ein Betriebsprogramm, Regelroutinen, Steuerroutinen und/oder Berechnungsroutinen auf. Ferner soll in diesem Zusammenhang unter einer "nutzungs- und/oder verbrauchsgeführten Regelung" insbesondere eine Regelung verstanden werden, bei welcher ein aktuell vorliegender Nutzungsgrad und/oder ein Energieverbrauch bei einer Regelung berücksichtigt wird. Vorzugsweise soll darunter insbesondere eine Regelung verstanden werden, bei welcher ein aktuell vorliegender Nutzungsgrad und/oder ein Energieverbrauch überwacht wird und zu einer Anpassung einer Regelgröße verwendet wird. Besonders bevorzugt soll darunter insbesondere ein Regelung verstanden werden, bei welcher zumindest eine Regelgröße abhängig von einem aktuell vorliegenden Nutzungsgrad und/oder einem Energieverbrauch, insbesondere hinsichtlich einer Effizienz, optimiert wird. Dabei soll unter einer "Regelung" insbesondere ein Vorgang verstanden werden, bei dem fortlaufend eine variable Größe, im folgenden als Regelgröße bezeichnet, erfasst, mit einer anderen variablen Größe, im Folgenden als Führungsgröße bezeichnet, verglichen und im Sinne einer Angleichung an die Führungsgröße beeinflusst wird. Des Weiteren soll unter "vorgesehen" insbesondere speziell programmiert, ausgelegt und/oder ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Ferner wird vorgeschlagen, dass die zumindest eine Recheneinheit dazu vorgesehen ist, die zumindest eine Reinraumelektronikeinheit zumindest teilweise abhängig von einer Personenpräsenz zu regeln. Vorzugsweise ist die Recheneinheit dazu vorgesehen, zumindest eine Regelgröße für die Reinraumelektronikeinheit abhängig von einer Personenpräsenz in dem zumindest einen Raum anzupassen. Bevorzugt erfolgt die Regelung der zumindest einen Reinraumelektronikeinheit zudem abhängig von einer Personenanzahl. Dadurch kann eine Regelung vorteilhaft an eine Personenpräsenz angepasst werden. Dadurch kann vorteilhaft einfach eine nutzungsgeführte Regelung ermöglicht werden. Ferner kann dadurch vorteilhaft die Präsenz einer Kontaminationsquelle für eine Regelung überwacht werden.

Erfindungsgemäß wird vorgeschlagen, dass die zumindest eine Recheneinheit dazu vorgesehen ist, zu einer nutzungs- und/oder verbrauchsgeführten Regelung der zumindest einen Reinraumelektronikeinheit Kontaminationsquellen und Wärmelasten in dem zumindest einen abgeschlossenen Raum zu erfassen und zu verarbeiten, wobei die Recheneinheit dazu vorgesehen ist, abhängig von einer erfassten Partikelkonzentration und einer Anzahl von Kontaminationsquellen in dem abgeschlossenen Raum, die Reinraumelektronikeinheit zu einer Filterung des Raums zu regeln. Vorzugsweise ist die zumindest eine Recheneinheit dazu vorgesehen, Kontaminationsquellen und Wärmelasten in dem zumindest einen abgeschlossenen Raum zu einer Regelung einer Umluftelektronik und/oder einer Filterelektronik der Reinraumelektronikeinheit zu erfassen und zu verarbeiten. Dadurch kann insbesondere eine vorteilhaft effiziente und zuverlässige Regelung der Reinraumelektronikeinheit erreicht werden. Dadurch können ferner zuverlässig Reinraumbedingungen in dem zumindest einen abgeschlossen Raum erreicht werden. Unter einer "Kontaminationsquelle" soll in diesem Zusammenhang insbesondere ein Objekt verstanden werden, das zu einer Erhöhung einer Partikelkonzentration beiträgt. Vorzugsweise soll darunter insbesondere ein Objekt verstanden werden, das in einem Reinraum einen Anstieg einer Partikelkonzentration erhöht. Ferner soll in diesem Zusammenhang unter einer "Wärmelast" insbesondere ein Objekt in einem Reinraum verstanden werden, welches Wärme erzeugt bzw. eine gegenüber seiner Umgebung erhöhte Temperatur aufweist.

Es wird ferner vorgeschlagen, dass das Reinraumsystem zumindest eine Überwachungseinheit aufweist, die zu einer zumindest teilweisen Erfassung einer Präsenz wenigstens einer Person vorgesehen ist. Vorzugsweise ist die Überwachungseinheit zu einer Erfassung einer ortsbezogenen Präsenz wenigstens einer Person vorgesehen. Dadurch kann vorteilhaft eine Erfassung einer Personenpräsenz erreicht werden. Ferner kann eine Regelung vorteilhaft an eine Personenpräsenz angepasst werden, wodurch vorteilhaft einfach eine nutzungsgeführte Regelung ermöglicht werden kann. Des Weiteren kann dadurch vorteilhaft die Präsenz einer Kontaminationsquelle für eine Regelung überwacht werden. Insbesondere kann bei einer Erfassung einer ortsbezogenen Präsenz sowie bei mehreren abgeschlossenen Räumen eine Einzelraum-Regelung ermöglicht werden. Unter einer "Überwachungseinheit" soll in diesem Zusammenhang insbesondere eine Einheit verstanden werden, die zumindest ein Überwachungselement aufweist oder die zumindest mit einem Überwachungselement gekoppelt ist. Vorzugsweise soll darunter insbesondere eine Einheit verstanden werden, die zu einer Auswertung von Daten des zumindest einen Überwachungselements vorgesehen ist. Bevorzugt ist die Einheit dazu vorgesehen, aus den Daten des zumindest einen Überwachungselements auf eine Anwesenheit, besonders bevorzugt auf eine Position, einer Person und/oder eines Gegenstand rückzuschließen.

Erfindungsgemäß wird vorgeschlagen, dass das Reinraumsystem zumindest eine Sensoreinheit aufweist, die zu einer Überwachung zumindest eines Parameters einer Luft in dem wenigstens einen Raum vorgesehen ist. Dadurch kann vorteilhaft für eine Regelung zumindest ein Parameter einer Luft in dem wenigstens einen Raum überwacht werden. Ferner kann dadurch zuverlässig Reinraumbedingungen gewährleistet bzw. zumindest überwacht werden. Insbesondere können so Reinraumbedingungen vorteilhaft nachgewiesen werden. Unter einer "Sensoreinheit" soll in diesem Zusammenhang insbesondere eine Einheit verstanden werden, die dazu vorgesehen ist, zumindest eine Kenngröße und/oder eine physikalische Eigenschaft aufzunehmen, wobei die Aufnahme aktiv, wie insbesondere durch Erzeugen und Aussenden eines elektrischen Messsignals, und/oder passiv, wie insbesondere durch eine Erfassung von Eigenschaftsänderungen eines Sensorbauteils, stattfinden kann. Es sind verschiedene, dem Fachmann als sinnvoll erscheinende Sensoreinheiten denkbar.

Zudem sieht die Erfindung vor, dass die zumindest eine Sensoreinheit zumindest einen Partikelzähler aufweist, der dazu vorgesehen ist, eine Partikelkonzentration in einer Luft in dem wenigstens einen Raum zu erfassen. Dadurch kann vorteilhaft für eine Regelung zumindest eine Partikelkonzentration in der Luft in dem wenigstens einen Raum überwacht werden. Ferner kann dadurch zuverlässig eine für Reinraumbedingungen benötigte Partikelkonzentration gewährleistet bzw. zumindest überwacht werden. Insbesondere können so Reinraumbedingungen vorteilhaft nachgewiesen werden. Unter einem "Partikelzähler" soll in diesem Zusammenhang insbesondere ein Sensor verstanden werden, welcher dazu vorgesehen ist, eine Partikelkonzentration in einer den Sensor umgebenden Luft zu erfassen. Vorzugsweise ist der Sensor dazu vorgesehen, eine Anzahl von Partikeln pro Volumeneinheit Luft zu erfassen.

Ferner sieht die Erfindung vor, dass die zumindest eine Recheneinheit dazu vorgesehen ist, abhängig von einer erfassten Partikelkonzentration in dem abgeschlossenen Raum, die Reinraumelektronikeinheit zu einer Filterung des zumindest einen abgeschlossenen Raums zu regeln. Dadurch kann vorteilhaft eine Partikelkonzentration konstant gehalten werden. Ferner kann dadurch vermieden werden, dass eine Partikelkonzentration zu stark ansteigt. Auf der anderen Seite kann eine unnötige Filterung vermieden werden. Es kann eine zuverlässige und effiziente Filterung erreicht werden. Dadurch kann wiederum eine Filterleistung gering gehalten werden.

Alternativ oder zusätzlich ist jedoch auch denkbar, dass die Reinraumelektronikeinheit zu einer Filterung abhängig von einer Personenpräsenz, einer Personenanzahl oder einer Tageszeit gesteuert und/oder geregelt wird. Dadurch kann eine Regelung vorteilhaft einfach erreicht werden. Ferner kann dadurch eine vorrausschauende Filterung ermöglicht werden. Insbesondere in Kombination mit der Überwachung einer Partikelkonzentration kann eine besonders zuverlässige und effiziente Filterung erreicht werden.

Des Weiteren wird vorgeschlagen, dass die zumindest eine Recheneinheit dazu vorgesehen ist, abhängig von einer Personenpräsenz und/oder einer Personenanzahl in dem Raum, einen Außenlufteintrag zu steuern und/oder zu regeln. Insbesondere wenn keine Personen im Raum sind kann eine Überströmung und/oder eine Fortluft auf annähernd null gebracht werden. Sind dagegen Personen in dem Raum kann ein Außenlufteintrag einer Personenanzahl entsprechend angepasst werden. Dadurch kann ein Außenlufteintrag vorteilhaft gering gehalten werden. Ferner kann dadurch eine vorteilhaft hohe Effizienz des Reinraumsystems erreicht werden.

Alternativ oder zusätzlich wäre jedoch auch denkbar, ein Außenlufteintrag abhängig von einer Tageszeit zu steuern und/oder zu regeln. Dadurch könnte eine Steuerung oder Regelung eines Außenlufteintrag vorteilhaft einfach gelöst werden. Ferner kann dadurch vorteilhaft einfach eine hohe Effizienz des Reinraumsystems erreicht werden.

Es wird ferner vorgeschlagen, dass die zumindest eine Recheneinheit dazu vorgesehen ist, die zumindest eine Reinraumelektronikeinheit zumindest teilweise witterungsgeführt zu regeln. Dadurch kann bei einer Regelung vorteilhaft auch eine Witterung mit einbezogen werden. Insbesondere kann so einer Witterung bei einer Regelung in Hinblick auf eine Effizienz berücksichtigt werden. Unter "witterungsgeführt" soll in diesem Zusammenhang insbesondere verstanden werden, dass bei einer Regelung aktuelle Witterungsbedingungen, wie insbesondere aktuelle Wetterverhältnisse, erfasst und verarbeitet werden. Vorzugsweise soll darunter insbesondere verstanden werden, dass Umwelteinflüsse, wie beispielsweise Wärmeeinstrahlung durch Sonne und/oder Außenluftkonditionen, wie insbesondere Temperatur und/oder Feuchtigkeit, und/oder eine Tageszeit, bei einer Regelung berücksichtigt werden.

Es wird weiter vorgeschlagen, dass die zumindest eine Recheneinheit dazu vorgesehen ist, eine relative Feuchtigkeit in dem zumindest einen abgeschlossen Raum abhängig von einer relativen Feuchtigkeit einer Außenluft anzupassen. Vorzugsweise ist die zumindest eine Recheneinheit dazu vorgesehen ist, eine relative Feuchtigkeit in dem zumindest einen abgeschlossen Raum abhängig von einer relativen Feuchtigkeit einer Außenluft zu nivellieren, also eine relative Feuchtigkeit in dem zumindest einen abgeschlossen Raum einer relativen Feuchtigkeit einer Außenluft zumindest in einem begrenzten Regelbereich anzunähern. Dadurch können vorteilhaft Raumluftkonditionen zumindest begrenzt an aktuelle Außenluftkonditionen angepasst werden. Vorzugsweise kann dadurch ein Energieverbrauch für einen Befeuchtung und/oder Entfeuchtung einer Raumluft gering gehalten werden. Hierdurch kann insbesondere eine hohe Effizienz des Reinraumsystems erreicht werden.

Zudem wird vorgeschlagen, dass die zumindest eine Recheneinheit dazu vorgesehen ist, eine Temperatur in dem zumindest einen abgeschlossen Raum abhängig von einer Temperatur einer Außenluft anzupassen. Vorzugsweise ist die zumindest eine Recheneinheit dazu vorgesehen ist, eine Temperatur in dem zumindest einen abgeschlossen Raum abhängig von einer Temperatur einer Außenluft zu nivellieren, also eine Temperatur in dem zumindest einen abgeschlossen Raum einer Temperatur einer Außenluft zumindest in einem begrenzten Regelbereich anzunähern. Dadurch können vorteilhaft Raumluftkonditionen zumindest begrenzt an aktuelle Außenluftkonditionen angepasst werden. Vorzugsweise kann dadurch ein Energieverbrauch für eine Erhitzung und/oder Abkühlung einer Raumluft gering gehalten werden. Hierdurch kann insbesondere eine hohe Effizienz des Reinraumsystems erreicht werden. Besonders bevorzugt kann gemeinsam mit einer Anpassung einer Feuchtigkeit vorteilhaft effizient eine Raumluftkondition geregelt werden.

Ferner wird vorgeschlagen, dass das Reinraumsystem zumindest eine Energierückgewinnungseinheit aufweist, dessen Energieertrag zumindest teilweise von der zumindest einen Recheneinheit bei einer Regelung der zumindest einen Reinraumelektronikeinheit berücksichtigt wird. Vorzugsweise wird eine zurückgewonnene Energie in das Reinraumsystem zurück eingespeist und/oder anderweitig verwendet. Dadurch kann vorteilhaft eine Verlustenergie vermieden bzw. wiederverwendet werden.

Hierdurch kann insbesondere eine hohe Effizienz des Reinraumsystems erreicht werden. Unter einer "Energierückgewinnungseinheit" soll in diesem Zusammenhang insbesondere eine Einheit verstanden werden, die zu einer Rückgewinnung zumindest eines Teil einer Verlustenergie vorgesehen ist. Vorzugsweise soll darunter insbesondere eine Einheit verstanden werden, die dazu vorgesehen ist, zumindest einen Teil einer Energie eines abströmenden Mediums auf ein zuströmendes und/oder zirkulierendes Medium zu übertragen. Es sind verschiedene, einem Fachmann als sinnvoll erscheinende Formen der Energierückgewinnung denkbar, wie beispielsweise eine Wärmerückgewinnung.

Ferner geht die Erfindung aus von einem Verfahren zum Betrieb eines Reinraumsystems.

Es wird vorgeschlagen, dass zumindest eine Reinraumelektronikeinheit nutzungs- und/oder verbrauchsgeführt von zumindest einer Recheneinheit geregelt wird. Dadurch kann insbesondere eine vorteilhaft hohe Effizienz der Reinraumelektronikeinheit erreicht werden. Ferner kann dadurch vorteilhaft eine Regelung der Reinraumelektronikeinheit abhängig von einer Nutzung und/oder einem Verbrauch erreicht werden.

### Zeichnung

Weitere Vorteile ergeben sich aus der folgenden Zeichnungsbeschreibung. In den Zeichnungen ist ein Ausführungsbeispiel der Erfindung dargestellt. Die Zeichnung, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigt:

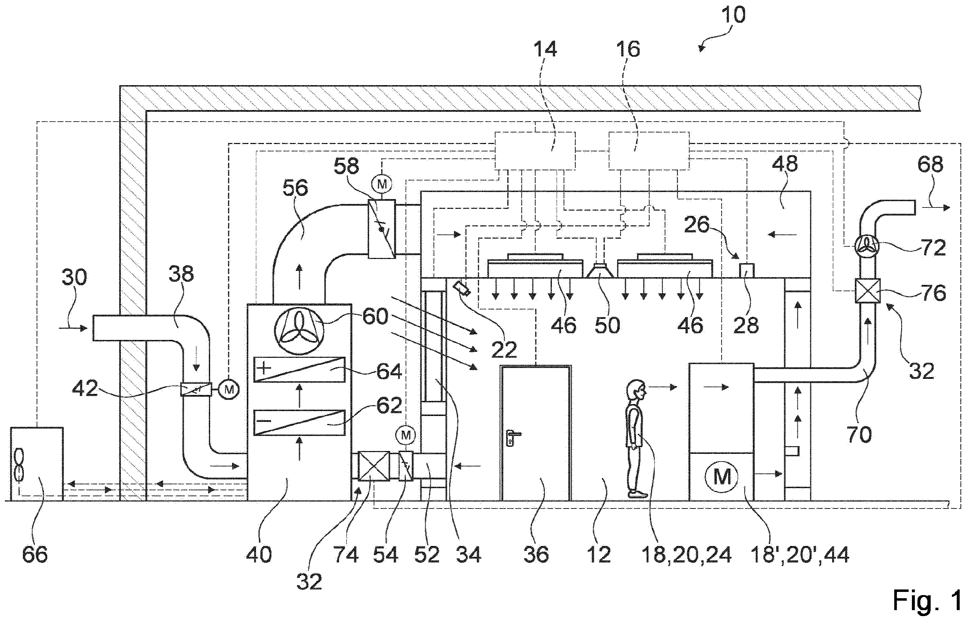

- Fig. 1: ein erfindungsgemäßes Reinraumsystem mit einem abgeschlossenen Raum, mit einer Reinraumelektronikeinheit und mit einer Recheneinheit in einer schematischen Darstellung.

### Beschreibung des Ausführungsbeispiels

Die Figur 1 zeigt ein Reinraumsystem 10. Das Reinraumsystem 10 weist einen in wenigstens einem Betriebszustand abgeschlossen Raum 12 auf. Der Raum 12 ist als Reinraum ausgebildet. Grundsätzlich wäre jedoch auch denkbar, dass das Reinraumsystem 10 mehrere, vorzugsweise mehrere aneinander angrenzende Reinräume umfasst. Das Reinraumsystem 10 ist hier in diesem Ausführungsbeispiel lediglich beispielhaft mit nur einem Raum 12 beschrieben, dies ist jedoch nicht als eine Einschränkung zu verstehen. Der Raum 12 ist in einem Gebäude angeordnet. Der Raum 12 weist ein nach außen gerichtetes Fenster 34 auf, über welches Tageslicht in den Raum 12 gelangen kann. Grundsätzlich wäre auch denkbar, dass der Raum 12 kein Fenster oder mehrere Fenster 34 aufweist. Die Figur 1 ist dabei lediglich schematisch dargestellt, eine Anordnung von Bauteilen muss dabei nicht einer realen Anordnung entsprechen. Eine Verdeckung des Fensters 34 ist dabei lediglich durch die Zweidimensionalität der Zeichnung bedingt. Der Raum 12 ist über eine Zugangstüre 36 von einer nicht weiter sichtbaren Schleuse aus zugänglich. Über die nicht weiter sichtbare Schleuse ist der Raum 12 von einer Umgebung aus zugänglich. Grundsätzlich wäre jedoch auch denkbar, dass der Raum 12 über die Zugangstüre 36 mit einem weiteren Reinraum verbunden ist, welcher wiederum mit einer Schleuse verbunden ist.

Ferner weist das Reinraumsystem 10 eine Reinraumelektronikeinheit 14 auf. Die Reinraumelektronikeinheit 14 ist zu einer Bereitstellung von Reinraumbedingungen in dem Raum 12 vorgesehen. Die Reinraumelektronikeinheit 14 bildet eine Elektronik der Bauteile des Reinraumsystems 10. Die Geräte des Reinraumsystem 10, die zu einer Bereitstellung von Reinraumbedingungen in dem Raum 12 vorgesehen sind, werden von der Reinraumelektronikeinheit 14 angesteuert. Die Reinraumelektronikeinheit 14 ist hier lediglich beispielhaft als zentrale Elektronik dargestellt, grundsätzlich wäre jedoch auch denkbar, dass die Reinraumelektronikeinheit 14 lediglich die einzelnen Elektroniken der Bauteile des Reinraumsystems 10 umfasst.

Des Weiteren weist das Reinraumsystem 10 eine Recheneinheit 16 auf. Die Recheneinheit 16 ist zu einer nutzungs- und verbrauchsgeführten Regelung der Reinraumelektronikeinheit 14 vorgesehen. Die Recheneinheit 16 ist dazu vorgesehen, eine Form der Ansteuerung der Geräte des Reinraumsystems 10 durch die Reinraumelektronikeinheit 14 zu regeln. Über die Recheneinheit 16 wird eine Ansteuerung nutzungs- und verbrauchsgeführt geregelt.

Das Reinraumsystem 10 weist ferner eine Überwachungseinheit 22 auf. Die Überwachungseinheit 22 ist von einer Kamera gebildet. Grundsätzlich wäre jedoch auch denkbar, dass die Überwachungseinheit 22 von mehreren Kameras gebildet ist. Die Überwachungseinheit 22 ist zu einer Erfassung einer Präsenz von Personen 24 vorgesehen. Die Überwachungseinheit 22 ist zu einer Erfassung einer Präsenz von Personen 24 in dem Raum 12 vorgesehen. Ferner ist die Überwachungseinheit 22 zu einer Erfassung einer Präsenz und einer Position von Personen 24 in dem Raum 12 vorgesehen. Insbesondere bei mehreren Räumen 12 kann dadurch insbesondere unterschieden werden, in welchem Raum 12 sich wie viele Personen 24 befinden. Die Überwachungseinheit 22 erfasst daher ob, wie viele und wo sich Personen 24 in dem Raum 12 befinden. Eine Erfassung kann dabei auf verschiedene, einem Fachmann als sinnvoll erscheinende Weisen erfolgen.

Die Recheneinheit 16 ist dazu vorgesehen, die Reinraumelektronikeinheit 14 teilweise abhängig von einer Personenpräsenz zu regeln. Die Recheneinheit 16 ist dazu vorgesehen, die Reinraumelektronikeinheit 14 teilweise abhängig von einer durch die Überwachungseinheit 22 erfassten Personenpräsenz zu regeln. Die Recheneinheit 16 ist dazu mit der Überwachungseinheit 22 verbunden. Die Recheneinheit 16 wertet ein Bildmaterial der Überwachungseinheit 22 aus und schließt daraus auf Personen 24 in dem Raum 12. Grundsätzlich wäre jedoch auch denkbar, dass die Personen 24 in dem Raum 12 zusätzlich oder alternativ einen Sender bei sich tragen, dessen Position in dem Raum 12 erfasst werden kann.

Die Recheneinheit 16 ist unter anderem dazu vorgesehen, abhängig von einer Personenpräsenz und einer Personenanzahl in dem Raum 12, einen Außenlufteintrag 30 zu regeln. Ein Außenlufteintrag 30 wird über eine Außenluftleitung 38 des Reinraumsystems 10 erreicht. Das Reinraumsystem 10 weist die Außenluftleitung 38 auf. Ferner weist das Reinraumsystem 10 einen Klimaschrank 40 auf. Über die Außenluftleitung 38 wird Außenluft in den Klimaschrank 40 geleitet, wo sie einer Raumluft zugeführt wird. Ein durch die Außenluftleitung 38 bereitgestellter Außenlufteintrag 30 kann über eine in der Außenluftleitung 38 befindliche Drosselklappe 42 gesteuert werden. Die Drosselklappe 42 weist einen Motor auf, der über die Reinraumelektronikeinheit 14 angesteuert wird. Die Reinraumelektronikeinheit 14 bildet eine Elektronik des Motors. Eine Ansteuerung der Drosselklappe 42 durch die Reinraumelektronikeinheit 14 wird abhängig von einer Personenpräsenz und einer Personenanzahl in dem Raum 12 durch die Recheneinheit 16 geregelt. Befinden sich keine Personen 24 in dem Raum 12 kann ein Außenlufteintrag 30 auf null gebracht werden. In dieser Zeit wird keine Frischluft benötigt. Mit steigender Personenanzahl steigt auch ein Frischluftbedarf und es wird durch die Recheneinheit 16 ein Außenlufteintrag 30 erhöht. Der Außenlufteintrag 30 wird dabei gemäß Arbeitsstättenrichtlinien geregelt. Durch den angepassten Außenlufteintrag 30 wird nur so viel Energie für eine Aufbereitung der Außenluft benötigt, wie unbedingt erforderlich. Insbesondere außerhalb der Betriebszeiten kann so ein auf eine Aufbereitung der Außenluft und damit auch auf eine dafür benötigte Energie verzichtet werden.

Ein Außenlufteintrag 30 kann zudem über eine Überströmung an der Zugangstüre 36 geregelt werden. Die Zugangstüre 36 weist dazu eine nicht weiter sichtbare absenkbare Dichtung auf. Eine Absenkung der Dichtung der Zugangstüre 36 kann über die Reinraumelektronikeinheit 14 gesteuert werden. Die Reinraumelektronikeinheit 14 bildet eine Elektronik der Zugangstüre 36. Eine Ansteuerung der Dichtung der Zugangstüre 36 durch die Reinraumelektronikeinheit 14 wird abhängig von einer Personenpräsenz in dem Raum 12 durch die Recheneinheit 16 geregelt. Befindet sich keine Person 24 in dem Raum 12 kann die Dichtung der Zugangstüre 36 abgesenkt werden, so dass eine Überströmung an der Zugangstüre 36 auf annähernd null reduziert werden kann. Grundsätzlich wäre jedoch auch eine andere, einem Fachmann als sinnvoll erscheinende Regelung der Dichtung der Zugangstüre 36 denkbar. Alternativ wäre jedoch auch denkbar, dass ein Außenlufteintrag 30 vollkommen über eine Überströmung an der Zugangstüre 36 geregelt wird. Ferner wäre zudem denkbar, dass zu einer Regelung des Außenlufteintrags 30 ein Sauerstoffgehalt in der Luft des Raums 12 überwacht wird.

Ferner wäre alternativ oder zusätzlich auch denkbar, dass ein Außenlufteintrag 30 abhängig von einer Tageszeit gesteuert wird. So könnte beispielsweise nachts, außerhalb der Betriebszeiten ein Außenlufteintrag 30 auf annähernd null reduziert werden. Während den Betriebszeiten könnte der Außenlufteintrag 30 dagegen auf einen Maximalwert, der beispielsweise für eine maximal zulässige Personenanzahl benötigt wird, erhöht werden. Dabei wäre auch denkbar, dass eine Personenanzahl bzw. ein aktueller Maximalwert lediglich über eine Auswertung eines Zeiterfassungssystems geschätzt wird.

Des Weiteren ist die Recheneinheit 16 dazu vorgesehen, zu der nutzungs- und verbrauchsgeführten Regelung der Reinraumelektronikeinheit 14 Kontaminationsquellen 18, 18' und Wärmelasten 20, 20' in dem abgeschlossenen Raum 12 zu erfassen und zu verarbeiten.

Die Recheneinheit 16 ist dazu vorgesehen, Kontaminationsquellen 18, 18' in dem Raum 12 zu identifizieren und bei einer nutzungs- und verbrauchsgeführten Regelung der zumindest einen Reinraumelektronikeinheit 14 zu berücksichtigen. Als Kontaminationsquellen 18, 18' sind beispielsweise Personen 24, Anlagen 44 in Funktion und/oder Prozesse in Funktion zu verstehen. Zu einer Erfassung von Personen 24 in dem Raum 12 ist die Recheneinheit 16 mit der Überwachungseinheit 22 verbunden. Zu einer Erfassung einer Funktion bzw. eines Betriebs einer Anlage 44 in dem Raum 12 oder eines anderen Prozesses ist die Recheneinheit 16 mit der Anlage 44 verbunden. So kann direkt erfasst werden, ob sich die Anlage 44 derzeit in Betrieb befindet. Dazu müssen vorteilhaft alle Anlagen 44, welche in dem Raum 12 aufgestellt werden mit der Recheneinheit 16 verbunden werden. Die Erfassung der Kontaminationsquellen 18, 18' in dem Raum 12 wird zu einer Regelung einer Filterung genutzt. Das Reinraumsystem 10 weist ferner eine Sensoreinheit 26 auf. Die Sensoreinheit 26 ist mit der Recheneinheit 16 verbunden. Die Sensoreinheit 26 ist zu einer Überwachung von Parametern einer Luft in dem Raum 12 vorgesehen. Die Sensoreinheit 26 weist einen Partikelzähler 28 auf. Der Partikelzähler 28 ist dazu vorgesehen, eine Partikelkonzentration in der Luft in dem Raum 12 zu erfassen. Hierdurch kann vorteilhaft eine aktuelle Kontamination in dem Raum 12 erfasst werden. Durch die Erfassung beider Kennwerte kann eine vorrausschauende Regelung erreicht werden. Insbesondere kann durch das Hinzukommen neuer Kontaminationsquellen 18, 18' darauf geschlossen werden, dass in naher Zukunft auch eine Partikelkonzentration in dem Raum 12 ansteigt. So können bereits vorab Maßnahmen gegen ein zu schnelles Steigen der Partikelkonzentration ergriffen werden. Ferner können so starke Schwankungen vermieden werden. Die Recheneinheit 16 ist dazu vorgesehen, abhängig von einer erfassten Partikelkonzentration in dem abgeschlossenen Raum 12, die Reinraumelektronikeinheit 14 zu einer Filterung des Raums 12 zu regeln. Die Recheneinheit 16 ist erfindungsgemäß dazu vorgesehen, abhängig von einer erfassten Partikelkonzentration und einer Anzahl von Kontaminationsquellen 18, 18' in dem abgeschlossenen Raum 12, die Reinraumelektronikeinheit 14 zu einer Filterung des Raums 12 zu regeln. Für eine Filterung einer Luft des Raums 12 weist das Reinraumsystem 10 mehrere Filtereinheiten 46 auf. Die Filtereinheiten 46 sind jeweils als Filter Fan Unit ausgebildet. Die Filtereinheiten 46 sind in einem über dem Raum 12 angeordneten Reinraum-Plenum 48 angeordnet. Die Filtereinheiten 46 weisen jeweils einen Filter und eine Ventilator auf, der Luft ansaugt und durch den Filter in den Raum 12 einbläst. Die Luft für die Filtereinheiten 46 wird dabei in einer Wand des Raums 12 in das Reinraum-Plenum 48 und anschließend durch die Filtereinheiten 46 gesaugt. Die Filtereinheiten 46 werden von der Reinraumelektronikeinheit 14 angesteuert. Die Ventilatoren der Filtereinheiten 46 werden von der Reinraumelektronikeinheit 14 angesteuert. Die Reinraumelektronikeinheit 14 bildet eine Elektronik der Filtereinheiten 46. Eine Ansteuerung der Filtereinheiten 46 durch die Reinraumelektronikeinheit 14 wird abhängig von einer Partikelkonzentration und einer Anzahl von Kontaminationsquellen 18, 18' in dem Raum 12 durch die Recheneinheit 16 geregelt. Eine Partikelkonzentration wird von der Recheneinheit 16 so auf einen konstanten Wert, wie er für den entsprechenden Reinraum vorgegeben ist, geregelt. Dadurch kann insbesondere ein geringer Energieverbrauch der Filtereinheiten 46 erreicht werden. Insbesondere kann dadurch eine Anzahl der Ventilatoren der Filtereinheiten 46 gering gehalten werden. Ferner kann dadurch zuverlässig eine Partikelkonzentration auf einem zulässigem Wert gehalten werden.

Zudem wäre denkbar, dass die Filtereinheiten 46 bei Nacht, also wenn sich keine Kontaminationsquellen 18, 18' in dem Raum 12 befinden, deaktiviert wird. Eine Regelung der Ansteuerung der Filtereinheiten 46 durch die Reinraumelektronikeinheit 14 durch die Recheneinheit 16 kann dadurch ferner vorteilhaft abhängig von einer Tageszeit erfolgen.

Die Recheneinheit 16 ist ferner dazu vorgesehen, Wärmelasten 20, 20' in dem Raum 12 zu identifizieren und bei einer nutzungs- und verbrauchsgeführten Regelung der zumindest einen Reinraumelektronikeinheit 14 zu berücksichtigen. Als Wärmelasten 20, 20' sind beispielsweise Personen 24, eine Beleuchtung 50, Anlagen 44 und/oder Prozesse zu verstehen. Zu einer Erfassung von Personen 24 in dem Raum 12 ist die Recheneinheit 16 mit der Überwachungseinheit 22 verbunden. Zu einer Erfassung der Anlage 44 und der Beleuchtung 50 in dem Raum 12 ist die Recheneinheit 16 mit der Anlage 44 und der Beleuchtung 50 verbunden. So kann direkt erfasst werden, ob sich die Anlage 44 oder die Beleuchtung 50 derzeit in Betrieb befindet. Die Erfassung der Wärmelasten 20, 20' in dem Raum 12 werden zu einer Regelung einer Temperatur in dem Raum 12 genutzt. Das Reinraumsystem 10 weist ferner eine Sensoreinheit 26 auf. Die Sensoreinheit 26 ist zu einer Überwachung von Parametern einer Luft in dem Raum 12 vorgesehen. Die Sensoreinheit 26 des Reinraumsystems 10 weist einen nicht weiter sichtbaren Temperatursensor auf, über welchen eine Temperatur in dem Raum 12 erfasst werden kann. Grundsätzlich wäre jedoch auch denkbar, dass eine Temperatur bzw. eine Wärmelast lediglich über den Temperatursensor oder lediglich über eine Erfassung von Wärmelasten 20, 20' festgestellt wird. Durch die Erfassung beider Kennwerte kann jedoch insbesondere eine vorrausschauende Regelung erreicht werden. Insbesondere kann durch das Hinzukommen neuer Wärmelasten 20, 20' darauf geschlossen werden, dass in naher Zukunft auch eine Temperatur in dem Raum 12 ansteigt. So können bereits vorab Maßnahmen gegen ein zu schnelles Steigen der Temperatur ergriffen werden. Des Weiteren können so starke Schwankungen vermieden werden. Die Recheneinheit 16 ist dazu vorgesehen, abhängig von einer erfassten Temperatur in dem abgeschlossenen Raum 12, die Reinraumelektronikeinheit 14 zu einer Temperierung des Raums 12 zu regeln. Für eine Temperierung einer Luft des Raums 12 weist das Reinraumsystem 10 den Klimaschrank 40 auf. Über den Klimaschrank 40 kann eine Luft des Raums 12 temperiert, befeuchtet und entfeuchtet werden. Der Klimaschrank 40 weist dazu eine Rückluftleitung 52 auf, über welche Luft aus dem Raum 12 angesaugt werden kann. Die Rückluftleitung 52 ist mit einer Drosselklappe 54 versehen, um eine Rückluft zu steuern. Ferner weist der Klimaschrank 40 eine Zuluftleitung 56 auf, über welche eine Zuluft zurück in den Raum 12 gebracht werden kann. Die Zuluftleitung 56 ist ebenfalls mit einer Drosselklappe 58 versehen, um eine Zuluft zu steuern. Über die Zuluftleitung 56 wird die Luft erst in das Reinraum-Plenum 48 eingeblasen, wo sie über die Filtereinheiten 46 in den Raum 12 gelangt. Des Weiteren weist der Klimaschrank 40 einen Ventilator 60, über welchen eine Luftzirkulation durch den Klimaschrank 40 erreicht werden, sowie eine Kühleinheit 62 und eine Heizeinheit 64 auf. Ferner weist der Klimaschrank 40 eine nicht weiter sichtbare Einrichtung zu einer Befeuchtung und Entfeuchtung auf. Über den Klimaschrank 40 wird zudem eine relative Feuchtigkeit in dem Raum 12 geregelt. Die Sensoreinheit 26 weist dazu einen nicht weiter sichtbaren Feuchtigkeitssensor auf, über welchen eine relative Feuchtigkeit in dem Raum 12 erfasst wird. Eine relative Feuchtigkeit wird von der Recheneinheit 16 so in einem annähernd konstanten Bereich, wie er für den entsprechenden Reinraum vorgegeben ist, geregelt. Über die Außenluftleitung 38 kann zusätzlich Außenluft in den Klimaschrank 40 gesaugt werden. Des Weiteren ist der Klimaschrank 40 mit einem Außengerät 66 verbunden. Das Außengerät 66 dient als Wärmetauscher für den Klimaschrank 40. Dadurch kann vorteilhaft energiesparend eine Temperierung der Luft in dem Klimaschrank 40 erreicht werden. Zudem wäre denkbar, dass über das Außengerät 66, insbesondere bei einer Ausbildung als Rotationswärmetauscher, zudem eine Feuchtigkeit reguliert werden kann. Der Klimaschrank 40, die Drosselklappen 54, 58 und das Außengerät 66 werden von der Reinraumelektronikeinheit 14 angesteuert. Die Reinraumelektronikeinheit 14 bildet eine Elektronik des Klimaschranks 40, der Drosselklappen 54, 58 und des Außengeräts 66. Eine Ansteuerung des Klimaschranks 40 durch die Reinraumelektronikeinheit 14 wird abhängig von einer gemessenen Temperatur und/oder einer Anzahl von Wärmelasten 20, 20' in dem Raum 12 durch die Recheneinheit 16 geregelt. Eine Temperatur wird von der Recheneinheit 16 so auf einen annähernd konstanten Wert geregelt, wie er für den entsprechenden Reinraum vorgegeben ist.

Die Recheneinheit 16 ist ferner dazu vorgesehen, abhängig von einem Betriebszustand der Anlage 44 in dem Raum 12, eine Fortluft 68 zu regeln. Eine Fortluft 68 wird über eine Fortluftleitung 70 des Reinraumsystems 10 aus dem Raum 12 geleitet. Das Reinraumsystem 10 weist die Fortluftleitung 70 auf. Über die Fortluftleitung 70 wird eine Abluft der Anlage 44 sowie eine Abluft des Raums 12 selbst aus dem Raum 12 geführt. Ein durch die Fortluftleitung 70 abgeführte Fortluft 68 kann über einen Ventilator 72 in der Fortluftleitung 70 gesteuert werden. Die Reinraumelektronikeinheit 14 bildet eine Elektronik des Ventilators 72. Eine Ansteuerung des Ventilators 72 durch die Reinraumelektronikeinheit 14 wird abhängig von einem Betriebszustand der Anlage 44 durch die Recheneinheit 16 geregelt. Befinden sich die Anlage 44 außer Betrieb wird eine Fortluft 68 auf null gebracht werden. In dieser Zeit muss keine Fortluft 68 aus dem Raum 12 gebracht werden. Befindet sich die Anlage 44 in Betrieb muss auch eine Fortluft 68 aktiviert werden. Durch die angepasste Fortluft 68 wird nur so viel Energie mittels der Fortluft 68 aus dem Raum 12 gefördert wie nötig. Insbesondere außerhalb der Betriebszeiten kann so ein auf eine Aufbereitung der Außenluft und damit auch auf eine dafür benötigte Energie verzichtet werden.

Die Recheneinheit 16 ist dazu vorgesehen, die zumindest eine Reinraumelektronikeinheit 14 teilweise witterungsgeführt zu regeln. Die Recheneinheit 16 ist dazu vorgesehen, eine Temperatur in dem abgeschlossen Raum 12 abhängig von einer Temperatur einer Außenluft anzupassen. Die Temperatur in dem abgeschlossen Raum 12 wird abhängig von einer Temperatur einer Außenluft nivelliert. Ein Sollwert einer Temperatur für die Regelung des Klimaschranks 40 wird daher von der Recheneinheit 16 zusätzlich gesteuert. Dazu wird über einen nicht weiter sichtbaren Temperatursensor eine Temperatur der Außenluft, insbesondere an einem Eingang der Außenluftleitung 38, erfasst. Liegt die Temperatur unter 10°C wird der Sollwert der Temperatur in dem geschlossenen Raum 12 auf 19°C gesetzt. Liegt die Temperatur zwischen 10°C und 20°C wird der Sollwert der Temperatur in dem geschlossenen Raum 12 auf 20°C gesetzt. Liegt die Temperatur über 20°C wird der Sollwert der Temperatur in dem geschlossenen Raum 12 auf 21°C gesetzt und liegt die Temperatur über 30°C wird der Sollwert der Temperatur in dem geschlossenen Raum 12 auf 22°C gesetzt. So kann bei niedrigem Energieverbrauch ein vorteilhaftes Raumklima erreicht werden. Zudem ist die Recheneinheit 16 dazu vorgesehen, witterungsgeführte Toleranzen für Raumluftkonditionen anzupassen. Die Recheneinheit 16 ist daher dazu vorgesehen, abhängig von einer Tageszeit oder einem Prozessbetrieb einen Toleranzbereich zu vergrößern bzw. zu verkleinern. Beispielsweise kann bei Tag bzw. in Prozessbetrieb eine Toleranz einer Temperatur in dem Raum 12 auf +/- 2°C gesetzt werden. Bei Nacht bzw. außerhalb eines Prozessbetriebs dagegen kann eine Toleranz einer Temperatur in dem Raum 12 auf +/- 5°C gesetzt werden. Dadurch kann ehe vorteilhaft hohe Effizienz erreicht werden.

Ferner ist die Recheneinheit 16 dazu vorgesehen, eine relative Feuchtigkeit in dem abgeschlossen Raum 12 abhängig von einer relative Feuchtigkeit einer Außenluft anzupassen. Die relative Feuchtigkeit in dem abgeschlossen Raum 12 wird abhängig von einer relative Feuchtigkeit einer Außenluft nivelliert. Ein Sollbereich einer relativen Feuchtigkeit für die Regelung des Klimaschranks 40 wird daher von der Recheneinheit 16 zusätzlich gesteuert. Dazu wird über einen nicht weiter sichtbaren Feuchtigkeitssensor eine relative Feuchtigkeit der Außenluft, insbesondere an einem Eingang der Außenluftleitung 38, erfasst. Liegt die relative Feuchtigkeit unter 40% wird der Sollbereich der relativen Feuchtigkeit in dem geschlossenen Raum 12 auf 40% bis 50% gesetzt. Liegt die relative Feuchtigkeit zwischen 40% und 60% wird der Sollbereich der relativen Feuchtigkeit in dem geschlossenen Raum 12 auf 45% bis 55% gesetzt. Liegt die relative Feuchtigkeit über 60% wird der Sollbereich der relativen Feuchtigkeit in dem geschlossenen Raum 12 auf 50% bis 60% gesetzt. So kann bei niedrigem Energieverbrauch ein vorteilhaftes Raumklima erreicht werden.

Des Weiteren ist die Recheneinheit 16 dazu vorgesehen, eine Wärmeeinstrahlung durch das Fenster 34 abhängig von einer Personenpräsenz zu steuern. Zu einer Erfassung von Personen 24 in dem Raum 12 ist die Recheneinheit 16 mit der Überwachungseinheit 22 verbunden. Befinden sich Personen 24 in dem Raum 12, wird Tageslicht durch das Fenster 34 in den Raum 12 gelassen. Befinden sich dagegen keine Personen 24 in dem Raum 12, werden die Fenster 34 vollständig abgedunkelt. Das Fenster 34 kann auf bekannte Weise abgedunkelt werden. Es sind verschiedene, einem Fachmann als sinnvoll erscheinende Techniken zu einer Abdunkelung denkbar, wie beispielsweise Jalousien oder elektrisch ansteuerbare Beschichtungen. Die Abdunkelung des Fensters 34 kann von der Reinraumelektronikeinheit 14 angesteuert werden. Die Reinraumelektronikeinheit 14 bildet eine Elektronik der Abdunkelung des Fensters 34. Eine Ansteuerung einer Abdunkelung des Fensters 34 durch die Reinraumelektronikeinheit 14 wird abhängig von einer Personenpräsenz in dem Raum 12 durch die Recheneinheit 16 gesteuert. Die Recheneinheit 16 steuert 34 abhängig von einer Personenpräsenz eine Abdunkelung des Raums 12. Ferner kann eine Abdunkelung des Fensters 34 zudem abhängig von einer Sonneneinstrahlung geregelt werden. Dadurch kann eine unnötige Erhitzung des Raums 12 und eine dadurch nötige Kühlung vermieden werden. Eine Ansteuerung einer Abdunkelung des Fensters 34 durch die Reinraumelektronikeinheit 14 wird abhängig von einer Sonneneinstrahlung durch die Recheneinheit 16 gesteuert.

Ferner ist die Recheneinheit 16 dazu vorgesehen, die Beleuchtung 50 des Raums 12 abhängig von einer Personenpräsenz zu steuern. Die Beleuchtung 50 des Raums 12 ist von einer LED-Beleuchtung gebildet. Zu einer Erfassung von Personen 24 in dem Raum 12 ist die Recheneinheit 16 mit der Überwachungseinheit 22 verbunden. Befinden sich Personen 24 in dem Raum 12 wird die Beleuchtung 50 automatisch aktiviert bzw. auf hell gestellt. Befinden sich dagegen keine Personen 24 in dem Raum 12, wird die Beleuchtung 50 deaktiviert bzw. abgedunkelt. Wird der Raum 12 lediglich abgedunkelt, kann insbesondere gewährleistet werden, dass auch bei fehlender Personenpräsenz in den Raum 12 eingesehen werden kann. Grundsätzlich wäre denkbar, dass ein Aktivieren bzw. ein Deaktivieren mit einer definierten Zeitverzögerung erfolgt. Bei ausreichender Größe des Raums 12 bzw. bei mehreren Räumen 12 wäre zudem denkbar, dass die Beleuchtung 50 zudem abhängig von einer ortsbezogenen Personenpräsenz gesteuert wird, so dass die Beleuchtung 50 lediglich in Bereichen automatisch aktiviert bzw. auf hell gestellt wird, in welchen sich die Person 24 befindet, in andere Bereiche wird die Beleuchtung 50 degegen deaktiviert bzw. abgedunkelt. Dabei wäre insbesondere denkbar, dass bei Anwesenheit einer Person 24 in dem Raum 12 ständig ein Weg zu einem Ausgang beleuchtet bleibt, so dass einer Person 24 ständig ein Weg zu einem Ausgang angezeigt wird. Die Beleuchtung 50 wird von der Reinraumelektronikeinheit 14 angesteuert. Die Reinraumelektronikeinheit 14 bildet eine Elektronik der Beleuchtung 50. Eine Ansteuerung der Beleuchtung 50 durch die Reinraumelektronikeinheit 14 wird abhängig von einer Personenpräsenz in dem Raum 12 durch die Recheneinheit 16 gesteuert. So kann insbesondere eine vorteilhaft hohe Energieeffizienz erreicht werden.

Das Reinraumsystem 10 weist ferner eine Energierückgewinnungseinheit 32 auf. Ein Energieertrag der Energierückgewinnungseinheit 32 wird teilweise von der Recheneinheit 16 bei einer Regelung der Reinraumelektronikeinheit 14 berücksichtigt. Die Energierückgewinnungseinheit 32 weist dazu ein erstes Wärmerückgewinnungselement 74 auf, das in der Rückluftleitung 52 angeordnet ist. Ferner weist die Energierückgewinnungseinheit 32 ein zweites Wärmerückgewinnungselement 76 auf, das in der Fortluftleitung 70 angeordnet ist. Die Wärmerückgewinnungselemente 74, 76 sind jeweils als Wärmetauscher ausgebildet. Das erste Wärmerückgewinnungselement 74 kann dabei beispielsweise zu einem Nachheizen bei einem Entfeuchteprozess des Klimaschranks 40 genutzt werden. Eine Energie der Energierückgewinnungseinheit 32 kann dabei auf verschiedene, einem Fachmann als sinnvoll erscheinende Weisen eingesetzt werden.

Bei einem Verfahren zum Betrieb des Reinraumsystems 10 wird die Reinraumelektronikeinheit 14 nutzungs- und verbrauchsgeführt von der Recheneinheit 16 geregelt. Ferner wird die Reinraumelektronikeinheit 14 witterungsgeführt von der Recheneinheit 16 geregelt. Eine Ansteuerung der Drosselklappe 42 durch die Reinraumelektronikeinheit 14 wird abhängig von einer Personenpräsenz und einer Personenanzahl in dem Raum 12 durch die Recheneinheit 16 geregelt. Ferner wird eine Ansteuerung der Dichtung der Zugangstüre 36 durch die Reinraumelektronikeinheit 14 abhängig von einer Personenpräsenz in dem Raum 12 durch die Recheneinheit 16 geregelt.

Eine Ansteuerung der Filtereinheiten 46 durch die Reinraumelektronikeinheit 14 wird abhängig von einer Partikelkonzentration und einer Anzahl von Kontaminationsquellen 18, 18' in dem Raum 12 durch die Recheneinheit 16 geregelt. Eine Partikelkonzentration wird von der Recheneinheit 16 so auf einen konstanten Wert, wie er für den entsprechenden Reinraum vorgegeben ist, geregelt. Des Weiteren wird die Ansteuerung des Klimaschranks 40 durch die Reinraumelektronikeinheit 14 abhängig von einer gemessenen Temperatur und/oder einer Anzahl von Wärmelasten 20, 20' in dem Raum 12 durch die Recheneinheit 16 geregelt. Eine Temperatur wird von der Recheneinheit 16 so auf einen annähernd konstanten Wert, wie er für den entsprechenden Reinraum vorgegeben ist, geregelt. Eine Ansteuerung des Ventilators 72 durch die Reinraumelektronikeinheit 14 wird abhängig von einem Betriebszustand der Anlage 44 durch die Recheneinheit 16 geregelt.

Die Recheneinheit 16 ist dazu vorgesehen, eine Temperatur in dem abgeschlossen Raum 12 abhängig von einer Temperatur einer Außenluft anzupassen. Die Temperatur in dem abgeschlossen Raum 12 wird abhängig von einer Temperatur einer Außenluft nivelliert. Ein Sollwert einer Temperatur für die Regelung des Klimaschranks 40 wird daher von der Recheneinheit 16 zusätzlich gesteuert. Zudem ist die Recheneinheit 16 dazu vorgesehen, witterungsgeführte Toleranzen für Raumluftkonditionen anzupassen. Die Recheneinheit 16 ist daher dazu vorgesehen, abhängig von einer Tageszeit oder einem Prozessbetrieb einen Toleranzbereich zu vergrößern bzw. zu verkleinern. Ferner ist die Recheneinheit 16 dazu vorgesehen, eine relative Feuchtigkeit in dem abgeschlossen Raum 12 abhängig von einer relative Feuchtigkeit einer Außenluft anzupassen. Die relative Feuchtigkeit in dem abgeschlossen Raum 12 wird abhängig von einer relative Feuchtigkeit einer Außenluft nivelliert. Ein Sollbereich einer relativen Feuchtigkeit für die Regelung des Klimaschranks 40 wird daher von der Recheneinheit 16 zusätzlich gesteuert.

Ferner steuert die Recheneinheit 16 abhängig von einer Personenpräsenz eine Abdunkelung des Raums 12. Eine Ansteuerung der Beleuchtung 50 durch die Reinraumelektronikeinheit 14 wird abhängig von einer Personenpräsenz in dem Raum 12 durch die Recheneinheit 16 gesteuert.

Durch die gesamte nutzungs-, verbrauchs- und witterungsgeführte Regelung der Reinraumelektronikeinheit 14 kann insbesondere ein vorteilhaft energieeffizientes Reinraumsystem 10 bereitgestellt werden.

Ferner ist das Reinraumsystem 10 dabei insbesondere auch für mehrere Räume 12 denkbar. Dabei wäre insbesondere denkbar, dass die Räume 12 separat geregelt werden, jedoch die Recheneinheiten 16 der Räume 12 untereinander kommunizieren, um eine Effizienz zu verbessern.

## Patentansprüche

1. Reinraumsystem mit zumindest einem in wenigstens einem Betriebszustand abgeschlossenen Raum (12), mit zumindest einer Reinraumelektronikeinheit (14) zu einer Bereitstellung von Reinraumbedingungen in dem wenigstens einen Raum (12), mit zumindest einer Recheneinheit (16), die zu einer nutzungs- und/oder verbrauchsgeführten Regelung der zumindest einen Reinraumelektronikeinheit (14) vorgesehen ist, und mit zumindest einer Sensoreinheit (26), die zu einer Überwachung zumindest eines Parameters einer Luft in dem wenigstens einen Raum (12) vorgesehen ist, wobei die zumindest eine Sensoreinheit (26) zumindest einen Partikelzähler (28) aufweist, der dazu vorgesehen ist, eine Partikelkonzentration in einer Luft in dem wenigstens einen Raum (12) zu erfassen, wobei die zumindest eine Recheneinheit (16) dazu vorgesehen ist, abhängig von einer erfassten Partikelkonzentration in dem abgeschlossenen Raum (12), die Reinraumelektronikeinheit (14) zu einer Filterung des zumindest einen abgeschlossenen Raums (12) zu regeln, wobei die zumindest eine Recheneinheit (16) dazu vorgesehen ist, zu einer nutzungs- und/oder verbrauchsgeführten Regelung der zumindest einen Reinraumelektronikeinheit (14) Kontaminationsquellen (18, 18') und Wärmelasten (20, 20') in dem zumindest einen abgeschlossenen Raum (12) zu erfassen und zu verarbeiten,
**dadurch gekennzeichnet, dass**
die Recheneinheit (16) dazu vorgesehen ist, abhängig von einer erfassten Partikelkonzentration und einer Anzahl von Kontaminationsquellen (18, 18') in dem abgeschlossenen Raum (12), die Reinraumelektronikeinheit (14) zu einer Filterung des Raums (12) zu regeln.

2. Reinraumsystem nach Anspruch 1,
**dadurch gekennzeichnet, dass**
die zumindest eine Recheneinheit (16) dazu vorgesehen ist, die zumindest eine Reinraumelektronikeinheit (14) zumindest teilweise abhängig von einer Personenpräsenz zu regeln.

3. Reinraumsystem nach einem der vorhergehenden Ansprüche,
**gekennzeichnet durch**
zumindest eine Überwachungseinheit (22), die zu einer Erfassung einer Präsenz wenigstens einer Person (24) vorgesehen ist.

4. Reinraumsystem nach einem der vorhergehenden Ansprüche,
**dadurch gekennzeichnet, dass**
die zumindest eine Recheneinheit (16) dazu vorgesehen ist, abhängig von einer Personenpräsenz und/oder einer Personenanzahl in dem Raum (12), einen Außenlufteintrag (30) zu steuern und/oder zu regeln.

5. Reinraumsystem nach einem der vorhergehenden Ansprüche,
**dadurch gekennzeichnet, dass**
die zumindest eine Recheneinheit (16) dazu vorgesehen ist, die zumindest eine Reinraumelektronikeinheit (14) zumindest teilweise witterungsgeführt zu regeln.

6. Reinraumsystem nach Anspruch 5,
**dadurch gekennzeichnet, dass**
die zumindest eine Recheneinheit (16) dazu vorgesehen ist, eine relative Feuchtigkeit in dem zumindest einen abgeschlossen Raum (12) abhängig von einer relativen Feuchtigkeit einer Außenluft anzupassen.

7. Reinraumsystem zumindest nach Anspruch 5,
**dadurch gekennzeichnet, dass**
die zumindest eine Recheneinheit (16) dazu vorgesehen ist, eine Temperatur in dem zumindest einen abgeschlossen Raum (12) abhängig von einer Temperatur einer Außenluft anzupassen.

8. Reinraumsystem nach einem der vorhergehenden Ansprüche,
**gekennzeichnet durch**
zumindest eine Energierückgewinnungseinheit (32), dessen Energieertrag zumindest teilweise von der zumindest einen Recheneinheit (16) bei einer Regelung der zumindest einen Reinraumelektronikeinheit (14) berücksichtigt wird.

9. Verfahren zum Betrieb eines Reinraumsystems (10) nach einem der vorhergehenden Ansprüche.

## Claims

1. Clean room system with at least one room (12) that is locked in at least one operating state, with at least one clean room electronics unit (14) to provide clean room conditions in the at least one room (12),
with at least one computing unit (16), which is configured for a usage-based and/or consumption-based regulation of the at least one clean room electronics unit (14), and with at least one sensor unit (26), which is configured for monitoring at least one parameter of an air in the at least one room (12), wherein the at least one sensor unit (26) comprises at least one particle counter (28) which is configured for capturing a concentration of particles in an air in the at least one room (12), wherein the at least one computing unit (16) is configured for, depending on a captured particle concentration in the locked room (12), regulating the clean room electronics unit (14) to filter the at least one locked room (12),
wherein the at least one computing unit (16) is configured for capturing and processing contamination sources (18, 18') and/or heat loads (20, 20') in the at least one locked room (12) to achieve a usage-based and/or consumption-based regulation of the at least one clean room electronics unit (14),
**characterised in that**
the computing unit (16) is configured for, depending on a captured particle concentration and a number of contamination sources (18, 18') in the locked room (12), regulating the clean room electronics unit (14) to filter the room (12).

2. Clean room system according to claim 1,
**characterised in that** the at least one computing unit (16) is configured for regulating the at least one clean room electronics unit (14) at least partially depending on a presence of a person/persons.

3. Clean room system according to one of the preceding claims,
**characterised by** at least one monitoring unit (22), which is configured for detecting a presence of at least one person (24).

4. Clean room system according to one of the preceding claims,
**characterised in that** the at least one computing unit (16) is configured for, depending on a presence of a person/persons and or a number of persons in the room (12), controlling and/or regulating an external air intake (30).

5. Clean room system according to one of the preceding claims,
**characterised in that** the at least one computing unit (16) is configured for regulating the at least one clean room electronics unit (14) in an at least partially weather-guided manner.

6. Clean room system according to claim 5,
**characterised in that** the at least one computing unit (16) is configured for adapting a relative humidity in the at least one locked room (12) depending on a relative humidity of an external air.

7. Clean room system at least according to claim 5,
**characterised in that** the at least one computing unit (16) is configured for adapting a temperature in the at least one locked room (12) depending on a temperature of an external air.

8. Clean room system according to one of the preceding claims,
**characterised by** at least one energy recovery unit (32) whose energy yield is at least partially taken into account by the at least one computing unit (16) when regulating the at least one clean room electronics unit (14).

9. Method for operating a clean room system (10) according to one of the preceding claims.

## Revendications

1. Système de salle blanche avec au moins une salle fermée à clef (12) en au moins un état de fonctionnement, avec au moins une unité électronique de salle blanche (14) pour fournir des conditions de salle blanche dans l'au moins une salle (12), avec au moins une unité de calcul (16) prévue pour une régulation de l'au moins une unité électronique de salle blanche (14), ladite régulation étant contrôlée par rapport à un usage et/ou une consommation, et avec au moins une unité de capteur (26) prévue pour une surveillance d'au moins un paramètre d'un air dans l'au moins une salle (12), où l'au moins une unité de capteur (26) comprend au moins un compteur de particules (28) prévu pour saisir une concentration de particules dans l'air de l'au moins une salle (12), où l'au moins une unité de calcul (16) est prévue pour, en fonction d'une concentration de particules saisie dans la salle fermée (12), réguler l'unité électronique de salle blanche (14) pour filtrer l'au moins une salle fermée (12),
où l'au moins une unité de calcul (16) est prévue pour détecter et traiter des sources de contamination (18, 18') et/ou des charges thermiques (20, 20') dans l'au moins une salle fermée (12) afin d'une régulation, contrôlée par rapport à un usage et/ou une consommation, de l'au moins une unité électronique de salle blanche (14),
**caractérisé en ce que**
l'unité de calcul (16) est prévue pour, en fonction d'une concentration de particules saisie et d'un nombre de sources de contamination (18, 18') dans la salle fermée (12), réguler l'unité électronique de salle blanche (14) pour filtrer la salle (12).

2. Système de salle blanche selon la revendication 1, **caractérisé en ce que** l'au moins une unité de calcul (16) est prévue pour réguler l'au moins une unité électronique de salle blanche (14) au moins partiellement en fonction d'une présence d'une personne/de personnes.

3. Système de salle blanche selon l'une quelconque des revendications précédentes, **caractérisé par** au moins une unité de surveillance (22) prévue pour saisir une présence d'au moins une personne (24).

4. Système de salle blanche selon l'une quelconque des revendications précédentes, **caractérisé en ce que** l'au moins une unité de calcul (16) est prévue pour commander et/ou réguler une entrée d'air extérieur (30) en fonction d'une présence de personnes et/ou d'un nombre de personnes dans la salle (12).

5. Système de salle blanche selon l'une quelconque des revendications précédentes, **caractérisé en ce que** l'au moins une unité de calcul (16) est prévue pour réguler l'au moins une unité électronique de salle blanche (14) guidée au moins partiellement par les conditions météorologiques.

6. Système de salle blanche selon la revendications, **caractérisé en ce que** l'au moins une unité de calcul (16) est prévue pour adapter une humidité relative dans l'au moins une salle fermée (12) en fonction d'une humidité relative d'un air extérieur.

7. Système de salle blanche au moins selon la revendications, **caractérisé en ce que** l'au moins une unité de calcul (16) est prévue pour adapter une température dans l'au moins une salle fermée (12) en fonction d'une température d'un air extérieur.

8. Système de salle blanche selon l'une quelconque des revendications précédentes, **caractérisé par** au moins une unité de récupération d'énergie (32), dont le rendement énergétique est au moins partiellement pris en compte par l'au moins une unité de calcul (16) dans une régulation de l'au moins une unité électronique de salle blanche (14).

9. Procédé de fonctionnement d'un système de salle blanche (10 selon l'une quelconque des revendications précédentes.
